# EUROPÄISCHE PATENTSCHRIFT

(11) **EP 3 241 332 B1**
(45) Veröffentlichungstag und Bekanntmachung des Hinweises auf die Patenterteilung: **10.07.2019**
(21) Anmeldenummer: 15840963.1
(22) Anmeldetag: 29.12.2015
(51) Int. Cl.: H04L 29/06

(54) **VERFAHREN ZUR ERSTELLUNG UND KONFIGURATION VON SCHLÜSSELN FÜR EIN ZWEITES ENDGERÄT**
METHOD FOR THE GENERATION AND CONFIGURATION OF KEYS FOR A SECOND TERMINAL
PROCÉDÉ DE CRÉATION ET DE CONFIGURATION DE CLÉS POUR UN DEUXIÈME TERMINAL

(30) Priorität: 31.12.2014 DE 102014119752
(43) Veröffentlichungstag der Anmeldung: 08.11.2017
(73) Patentinhaber: 1&1 Internet AG, 56410 Montabaur (DE)
(72) Erfinder: BIEDNER, Simeon, 76135 Karlsruhe (DE); LERGENMÜLLER, Carsten, 76135 Karlsruhe (DE); OBERNDÖRFER, Thomas, 69120 Heidelberg (DE)
(86) Internationale Anmeldenummer: PCT/DE2015/100546
(87) Internationale Veröffentlichungsnummer: WO 2016/107622

(56) Entgegenhaltungen:
- WO-A1-00/33506
- DE-B3-102013 108 714
- Anonymous: "Creating the Personal Information Exchange (PFX) Certificate", Microsoft , 2. September 2009 (2009-09-02), Seite 2PP, XP002756821, Gefunden im Internet: URL:https://technet.microsoft.com/en-us/li brary/dd261744.aspx [gefunden am 2016-04-20]

## Beschreibung

Die Erfindung betrifft ein Verfahren zur benutzerseitigen Erstellung und Konfiguration von Schlüsseln eines benutzerseitigen zweiten Endgerätes.

### Hintergrund der Erfindung

Sichere Kommunikation wird zunehmend von Unternehmen als auch Privatpersonen eingefordert. Diese Kommunikation soll eine Ende-zu-Ende Verschlüsselung zu Verfügung stellen. Hierzu sind verschiedene Verfahren, insbesondere das beliebte Pretty-Good-Privacy (PGP) Verfahren bekannt.

Zugleich ist jedoch festzustellen, dass die jeweiligen Benutzer mittels einer Vielzahl von Endgeräten kommunizieren. Während die Konfiguration von herkömmlichen Endgeräten, wie z.B. Desktop-Rechnern, bzw. den entsprechenden Kommunikationsagenten, wie z.B. Email-Clients oder WWW-Browser, nur noch geringe Hürden für den Laien aufweisen, ist die Konfiguration von mobilen Endgeräten, wie z.B. Smartphones und Tablets, bzw. deren Kommunikationsagenten ungleich schwieriger.

Prinzipiell wäre es möglich, allen Endgeräten einen eigenen Schlüssel zuzuordnen. Allerdings müssten dann auch alle Schlüssel dem jeweiligen Kommunikationspartner bekannt sein, sodass alle Schlüssel mit aufgenommen werden könnten. Dies ist zum einen aufwändig, zum anderen wäre dann z.B. eine vorgenommene Kommunikation, wie z.B. eine verschlüsselte Email, nachträglich nicht mit einem neuen Endgerät zu entschlüsseln.

WO 00/33506 A1 offenbart ein Verfahren zur vertraulichen Speicherung von Daten eines Nutzers auf einem Server, in dem ein geheimer Schlüssel auf diesem Server gespeichert wird, um es dem Benutzer zu ermöglichen, auf die verschlüsselten Daten von verschiedenen Endgeräten zuzugreifen.

Ausgehend von dieser Situation ist es Aufgabe der Erfindung eine Möglichkeit bereitzustellen, mit der der jeweilige Nutzer ein zweites Endgerät sicher mit einem Schlüssel ausstatten kann.

Die Aufgabe wird gelöst, durch ein Verfahren gemäß Anspruch 1. Weitere vorteilhafte Ausgestaltungen sind insbesondere Gegenstand der abhängigen Ansprüche.

Nachfolgend wird die Erfindung näher unter Bezug auf die Figuren erläutert. In diesen zeigt:

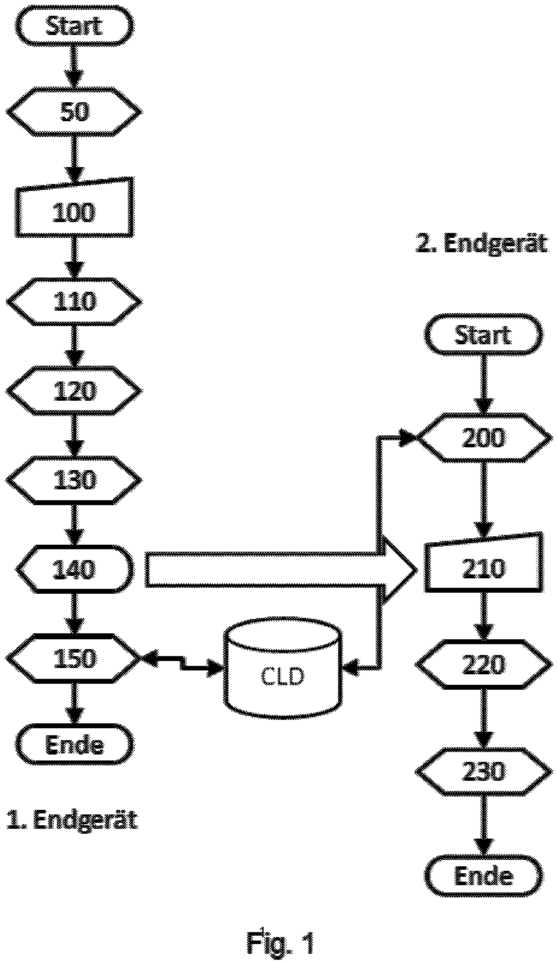

Fig. 1 beispielhafte Ablaufpläne von erfindungsgemäßen Verfahren in Bezug auf Ausführungsformen der Erfindung.

In Figur 1 sind beispielhafte Ablaufpläne von erfindungsgemäßen Verfahren in Bezug auf Ausführungsformen der Erfindung gezeigt.

Dabei wird zunächst in einem ersten Schritt 50, der auch unabhängig von einem Endgerät EG1 EG2 des Benutzers sein kann, ein privater Schlüssel für den Benutzer erzeugt.

Nachfolgend wird angenommen, dass der erzeugte private Schlüssel bereits auf dem ersten Endgerät EG1 des Benutzers installiert und durch ein Passwort (optional) geschützt ist.

Um nun auch den privaten Schlüssel des Benutzers auf einem zweiten Endgerät zu installieren wird nun - soweit erforderlich - das Passwort des privaten Schlüssels auf dem ersten Endgerät in einem Schritt 100 eingegeben, um diesen privaten Schlüssel in einem weiteren Schritt 110 zu entsperren.

Anschließend wird der private Schlüssel und das zugehörige Passwort in ein Paket verpackt, welches anschließend mit einem Cloud-Passwort auf dem ersten Endgerät EG1 des Benutzers verschlüsselt wird.

Da der Schlüssel und das Passwort nun mit einem nur dem Benutzer bekannten Cloud-Passwort verschlüsselt ist, und der Benutzer in aller Regel auf die Sicherheit seiner eigenen Geräte vertrauen kann, kann der Benutzer nun das verschlüsselte Paket mittels eines Email-Providers, SMS-Service Centers, MMS Service-Centers oder einem vergleichbaren Dienst CLD versenden oder auf einem Austausch-Server CLD ablegen. Dabei ist der Austausch-Server CLD nicht notwendigerweise ein physikalisch einzelner Server, sondern der Austausch-Server CLD kann auch Bestandteil eines anderen Server-Systems sein, sodass beispielsweise WWW-Funktionalitäten und/oder Email-Funktionalitäten, wie die eines POP- / IMAP- und/oder eines SMTP-Servers, neben der Austauschfunktionalität bereitgestellt wird. Durch die Co-Lokalisierung von Servern kann auch der Aufwand für die Adressierung verringert werden, da nun z.B. bereits konfigurierte und/oder bekannte Dienste verwendet werden können.

Der Austausch-Server kann dabei z.B. ein von einem Provider zur Verfügung gestellter Speicher sein oder aber jeder andere geeignete Speicher, von dem der Benutzer nun das mit dem Cloud-Passwort verschlüsselte Paket mit seinem zweiten Endgerät EG2 abrufen kann.

Damit auf dem zweiten Endgerät EG2 das Paket wieder entschlüsselt werden kann, muss in einer geeigneten Art und Weise das Cloud-Passwort zugänglich gemacht werden.

Im Beispiel der Erfindung wird das Cloud-Passwort auf dem ersten Endgerät EG1 zunächst ausgegeben. Offensichtlich kann dieser Schritt vor oder nach dem Ablegen 150 des verschlüsselten Paketes auf einem Server CLD vorgenommen werden.

Das zweite Endgerät EG2 des Benutzers kann nachdem das mit dem Cloud-Passwort verschlüsselte Paket abgelegt wurde konfiguriert werden.

Dazu wird zunächst das verschlüsselte Paket bevorzugt von dem Server CLD auf das zweite Endgerät EG2 des Benutzers übertragen.

Anschließend wird das Cloud-Passwort zur Entschlüsselung des Paketes auf dem zweiten Endgerät EG2 eingegeben 210, um sodann das verschlüsselte Paket zu entschlüsseln 220 und den privaten Schlüssel zu installieren.

Dabei können die Verfahrensschritte 50 bis 150 im Wesentlichen auf einem ersten Benutzerendgerät EG1 bzw. mittels eines WWW-Browsers und geeigneten lokalen oder entfernten Servlets zur Verfügung gestellt werden. Gleichfalls können die Verfahrensschritte 200 bis 230 im Wesentlichen auf einem zweiten Benutzerendgerät EG2 bzw. mittels eines WWW-Browsers und geeigneten lokalen oder entfernten Servlets zur Verfügung gestellt werden.

Beispielsweise ist es möglich für den Transfer und/oder die Generierung des Paketes Funktionalität, wie sie z.B. von einer Browser-Extension bereitgestellt wird, zu verwenden.

Besonders vorteilhaft ist das Verfahren deshalb, weil es in einer vom Benutzer als sicher empfundenen Umgebung vorgenommen wird. Somit sind die auszutauschenden Schlüsseldaten bei korrekter Handhabung sicher vor einem Zugriff selbst bei Ablage auf einem entfernten Server CLD oder Übermittlung über das Internet.

Weiterhin ist der Passwort-Austausch innerhalb einer sicheren Umgebung mittels anderer Medien ein weiteres Merkmal, mit dem die Sicherheit erhöht werden kann.

So kann beispielsweise das Cloud-Passwort als Textfolge auf einem Bildschirm oder Drucker am ersten Endgerät EG1 ausgegeben 140 werden. Diese Textfolge kann dann über ein geeignetes User-Interface auf dem zweiten Endgerät EG2 im Schritt 210 z.B. mittels einer Tastatur wieder eingegeben werden.

Alternativ oder zusätzlich kann das Cloud-Passwort als ein- oder mehrdimensionaler Barcode oder Punkmatrixcode auf einem Bildschirm oder Drucker am ersten Endgerät ausgegeben 140 werden. Entsprechenderweise kann dann z.B. der ein- oder mehrdimensionaler Barcode oder Punkmatrixcode in Schritt 150 am zweiten Endgerät mittels eines Barcode-Scanners im Schritt 210 eingegeben werden. Als Barcode-Scanner eignet sich beispielsweise eine im zweiten Endgerät eingebaute Kamera, die nachdem sie vom Benutzer auf den Barcode ausgerichtet wurde das Bild des Barcodes erfasst und diesen, verzugsweise mittels einem, auf dem zweiten Endgerät installierten Anwendungsprogramms dekodiert werden.

Ohne weiteres kann zusammen mit der Ausgabe des Cloud-Passworts auch weitere Information, wie z.B. die Adresse des Austausch-Servers CLD in Textform oder als ein- oder mehrdimensionaler Barcode ausgegeben werden. Hierdurch wird die Benutzerfreundlichkeit deutlich verbessert.

In einer Ausgestaltung der Erfindung wird auch der privaten Schlüssel auf dem zweiten Endgerät EG2 nachdem er dort installiert ist mit dem bereits vergebenen Passwort für den privaten Schlüssel verschlüsselt.

Hierdurch kann erreicht werden, dass der Benutzer sich nur ein Passwort für seinen privaten Schlüssel unabhängig vom Gerät merken muss. Hierdurch wird die Nutzerfreundlichkeit deutlich verbessert.

Besonders vorteilhaft ist es, wenn der privaten Schlüssel Teil eines PGP-Schlüsselpaares ist. PGP-Schlüssel sind weit verbreitet und die Akzeptanz dieser Schlüssel ist hoch. Insbesondere erlaubt dieses System eine Integration solcher Schlüssel über verschiedenste Endgeräte EG1, EG2 des Benutzers.

Ohne weiteres können die vorgestellten Verfahren mit unterschiedlichsten Schlüsselverfahren eingesetzt werden. Dabei kann der private Schlüssel Teil eines symmetrischen oder eines asymmetrischen Schlüsselpaars aus einem öffentlichen und einem privaten Schlüssel sein. Insbesondere kann jedoch der private Schlüssel eine variable Schlüssellänge aufweisen und mittels RSA- oder ECC Verfahren erzeugt werden. Die Wahl der Schlüssellänge kann dabei hinreichend groß gewählt sein, so dass ein Brute-Force-Angriff entsprechend lang ist, sodass er als unvernünftig nicht unternommen werden würde.

Um eine zusätzliche Sicherheit bereitzustellen, kann optional vorgesehen sein, dass das verschlüsselte Paket mit dem privaten Schlüssel auf dem ersten Endgerät EG1 signiert 130 wird.

Ohne weiteres können die vorgenannten Verfahren, die in Zusammenhang mit dem ersten Endgerät EG1 bzw. dem zweiten Endgerät EG2 des Benutzers beschrieben wurden, auch in einer Datenfolge verkörpert sein, welche Anweisungen zur Einrichtung eines Computers oder eines mit einem Computer vergleichbaren Gerätes, wie z.B. ein Smartphone, eine Tablet-Computer, ein Phablet, etc. zur Ausführung eines der zuvor beschriebenen Verfahren geeignet sind. Dabei können jegliche Form von Programmiersprache Anwendung finden, d.h. sowohl plattformspezifische Codierungen zur direkten Ausführung als auch interpretierbaren Code. Die Datenfolgen können dabei über Netzwerk oder physikalische Datenträger zur Ausführung auf den jeweiligen Endgeräten bereitgestellt werden.

Obwohl vorstehend die Verfahren in Bezug auf ein zweites Endgerät dargestellt sind ist es ohne weiteres möglich auch zwei drei oder noch mehr Endgeräte des Benutzers in gleicher Art und Weise zu konfigurieren. Dabei bedarf es in aller Regel nicht mehr des Durchlaufens der Schritte 50 bis 150, sondern lediglich der Schritte 200 bis 230.

Mit der vorgestellten Erfindung ist nunmehr auch möglich mit Hilfe einer Browser-Extension für Benutzer PGP in einfacher Weise anzubieten. Die Verschlüsselung dabei ist eine vollständige Ende-zu-Ende Verschlüsselung, die ausschließlich auf den jeweiligen Endgeräten verschlüsselt bzw. entschlüsselt werden kann.

Somit kann ein Benutzer sicher verschlüsselt kommunizieren, ohne dass ein Angreifer mit Zugriff auf die Leitung oder Systeme vom jeweiligen Übermittlungsdienst die Nachrichten lesen kann.

Dabei basiert das System und die zugehörigen Verfahren darauf, dass die Hardware und die Betriebssystem der Endgeräte der Benutzer aktuell, sicher und vertrauenswürdig sind.

Weiterhin ist auch ein Mindestmaß an Vertrauen in sogenannte Public Keys, also öffentliche Schlüssel, vorausgesetzt. Dabei werden Public Keys in einem sogenannten Keyring als vertrauenswürdig angesehen. Daher sollte der Nutzer nur solche Public Keys übernehmen, bei denen er sicher ist, dass sie authentisch sind.

Dabei können Benutzer (bzw. die jeweiligen Endgeräte oder ein anzeigender Web-Server) sogenannte Man-in-the-Middle-Angriffe dadurch erkennen, dass der Absender eines öffentlichen Schlüssels über einen unabhängigen Kommunikationskanal kontaktiert (z. B. Telefon) und mit diesem Fingerprints abgeglichen werden.

Einzelne Provider bestätigen für ihre Kunden, dass beispielsweise eine Email-Adresse und ein öffentlicher Schlüssel zueinander passen.

Diese Bestätigung kann kryptografisch erfolgen, vorzugsweise durch Signieren des Public Keys und durch Aufnahme des Keys in einen öffentlichen Keyserver. An dieser Stelle ist Vertrauen zum Betreiber des öffentliche Keyservers erforderlich, wenn der Benutzer sich den zusätzlichen Abgleich der Fingerprints sparen will.

## Patentansprüche

1. Verfahren zur benutzerseitigen Erstellung und Konfiguration von Schlüsseln eines benutzerseitigen zweiten Endgerätes (EG2), aufweisend die Schritte:
• Erzeugen (50) eines privaten Schlüssels,
• Empfangen (100) eines Passwortes für den privaten Schlüssel,
• Verpacken des priveten Schlüssels und des Passwortes für den privaten Schlüssel in ein Paket und Verschlüsseln des Paketes mit einem Cloud-Passwort (120) auf einem ersten Endgerät (EG1) des Benutzers,
• Ablegen (150) des verschlüsselten Paketes auf einem Server (CLD),
• Ausgeben (140) des Cloud-Passwortes als ein- oder mehrdimensionaler Barcode auf einem Bildschirm oder Drucker auf dem ersten Endgerät (EG1),
• Erhalten (200) des verschlüsselten Paketes von dem Server (CLD) auf einem zweiten Endgerät (EG2) des Benutzers,
• Eingeben (210) des Cloud-Passwortes auf dem zweiten Endgerät (EG2),
• Entschlüsseln (220) des verschlüsselten Paketes und installieren (230) des privaten Schlüssels.

2. Verfahren nach Anspruch 1, **dadurch gekennzeichnet, dass** das Cloud-Passwort als Textfolge auf einem Bildschirm oder Drucker am ersten Endgerät ausgegeben (140) wird.

3. Verfahren nach einem der vorhergehenden Ansprüche, **dadurch gekennzeichnet, dass** der privaten Schlüssel auf dem zweiten Endgerät (EG2) mit dem Passwort für den privaten Schlüssel verschlüsselt wird.

4. Verfahren nach einem der vorhergehenden Ansprüche, **dadurch gekennzeichnet, dass** das Cloud-Passwort mittels einer Tastatur oder mittels eines Barcode-Lesers eingegeben (210) wird.

5. Verfahren nach einem der vorhergehenden Ansprüche, **dadurch gekennzeichnet, dass** der privaten Schlüssel Teil eines PGP-Schlüsselpaares ist.

6. Verfahren nach einem der vorhergehenden Ansprüche, **dadurch gekennzeichnet, dass** der private Schlüssel eine variable Schlüssellänge aufweist und mittels RSA- oder ECC Verfahren erzeugt wurde.

7. Verfahren nach einem der vorhergehenden Ansprüche, **dadurch gekennzeichnet, dass** das verschlüsselte Paket mit dem privaten Schlüssel auf dem ersten Endgerät signiert (130) wird,

8. Computerprogramm, aufweisend Anweisungen, die bei der Ausführung des Programms durch einen Computer diesen veranlassen, eines der Verfahren nach einem der vorhergehenden Ansprüche auszuführen.

## Claims

1. Method for user-side creation and configuration of keys of a user-side second terminal (EG2), comprising the steps:
• Generating (50) a private key,
• Receiving (100) a password for the private key,
• Packing the private key and the password for the private key into a package and encrypting the package with a cloud password (120) on a user's first terminal device (EG1),
• Storing (150) the encrypted packet on a server (CLD),
• Outputting (140) of the cloud password as a one- or multidimensional barcode on a screen or printer on the first terminal device (EG1),
• Receiving (200) the encrypted packet from the server on a second user device (EG2),
• Entering (210) the cloud password on the second device (EG2),
• Decrypting (220) the encrypted package and installing (230) the private key.

2. A method according to claim 1, **characterized in that** the cloud password is output (140) as a text string on a screen or printer at the first terminal.

3. Method according to one of the preceding claims, **characterized in that** the private key is encrypted on the second terminal (EG2) with the password for the private key.

4. Method according to one of the preceding claims, **characterized in that** the cloud password is input (210) by means of a keyboard or by means of a barcode reader.

5. Method according to one of the preceding claims, **characterized in that** the private key is part of a PGP key pair.

6. Method according to one of the preceding claims **characterized in that** the private key has a variable key length and was generated by means of RSA or ECC methods.

7. Method according to one of the preceding claims, **characterized in that** the encrypted packet with the private key is signed (130) on the first terminal device,

8. A computer program comprising instructions, which, when the program is executed by a computer, cause the computer to perform one of the methods in accordance with one of the preceding claims.

## Revendications

1. Procédé de création et de configuration côté utilisateur des touches d'un deuxième terminal (EG2) côté utilisateur, comprenant les étapes suivantes :
• Génération (50) d'une clé privée,
• Recevoir (100) un mot de passe pour la clé privée,
• Regroupement de la clé privée et du mot de passe de la clé privée dans un package et cryptage du package avec un mot de passe cloud (120) sur le premier terminal (EG1) de l'utilisateur,
• Stockage (150) du paquet crypté sur un serveur (CLD),
• Emission (140) du mot de passe du nuage sous la forme d'un code à barres unidimensionnel ou multidimensionnel sur un écran ou une imprimante sur le premier terminal (EG1),
• Réception (200) du paquet crypté du serveur (CLD) sur un deuxième périphérique utilisateur (EG2),
• Saisissez (210) le mot de passe cloud sur le deuxième appareil (EG2), et
• Décryptez (220) le paquet crypté et installez (230) la clé privée.

2. Procédé selon la revendication 1, **caractérisé en ce que** le mot de passe de nuage est édité (140) sous la forme d'une chaîne de texte sur un écran ou une imprimante au premier terminal.

3. Procédé selon l'une des revendications précédentes, **caractérisé en ce que** la clé privée est cryptée sur le deuxième terminal (EG2) avec le mot de passe de la clé privée.

4. Procédé selon l'une des revendications précédentes, **caractérisé en ce que** le mot de passe du nuage est entré (210) au moyen d'un clavier ou d'un lecteur de code à barres.

5. Procédé selon l'une des revendications précédentes, **caractérisé en ce que** la clé privée fait partie d'une paire de clés PGP.

6. Procédé selon l'une des revendications précédentes, **caractérisé en ce que** la clé privée a une longueur de clé variable et a été générée au moyen de procédés RSA ou ECC.

7. Procédé selon l'une des revendications précédentes, **caractérisé en ce que** le paquet crypté avec la clé privée est signé (130) sur le premier dispositif terminal,

8. Programme d'ordinateur comprenant des instructions qui, lorsque le programme est exécuté par un ordinateur, amènent l'ordinateur à exécuter une des méthodes conformément à l'une des revendications précédentes.
